(19) **Europäisches Patentamt**
**European Patent Office**
**Office européen des brevets**

(11) **EP 4 734 471 A1**

(12) **EUROPEAN PATENT APPLICATION**
published in accordance with Art. 153(4) EPC

(43) Date of publication:
**29.04.2026  Bulletin 2026/18**

(21) Application number: **24899371.9**

(22) Date of filing: **02.09.2024**

(51) International Patent Classification (IPC):
**H04L 43/103** (2022.01)      **H04L 43/106** (2022.01)

(52) Cooperative Patent Classification (CPC):
**H04L 43/10; H04L 43/103; H04L 43/106**

(86) International application number:
**PCT/CN2024/116210**

(87) International publication number:
**WO 2025/118725 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **08.12.2023  CN 202311689035**

(71) Applicant: **Huawei Technologies Co., Ltd.
Shenzhen, Guangdong 518129 (CN)**

(72) Inventor: **ZHOU, Yaxiong
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **HEARTBEAT PACKET SENDING METHOD, STORAGE APPARATUS, AND ELECTRONIC DEVICE**

(57)     The present invention discloses a heartbeat packet sending method, a storage apparatus, and an electronic device. The storage apparatus includes a processor and a memory. The memory stores a first correspondence and a target temperature difference. The method includes: detecting that the processor needs to enter a low-power state, and obtaining a first temperature and a first moment corresponding to the first temperature; determining a first heartbeat interval based on the first temperature, the first moment, the first correspondence, and the target temperature difference; sending a first heartbeat packet to a main system based on the first moment and the first heartbeat interval, and obtaining a second temperature and a second moment corresponding to the second temperature; determining a second heartbeat interval based on the second temperature, the second moment, the first correspondence, and the target temperature difference; and sending a second heartbeat packet to the main system based on the second moment and the second heartbeat interval, where the first heartbeat interval is different from the second heartbeat interval. This can meet requirements for both low power consumption and high reliability.

Detect that a processor needs to enter a low-power state, and obtain a first temperature and a first moment corresponding to the first temperature — 502

Determine a first heartbeat interval based on the first temperature, the first moment, a first correspondence, and a target temperature difference — 504

Send a first heartbeat packet to a main system based on the first moment and the first heartbeat interval, and obtain a second temperature and a second moment corresponding to the second temperature — 506

Determine a second heartbeat interval based on the second temperature, the second moment, the first correspondence, and the target temperature difference — 508

Send a second heartbeat packet to the main system based on the second moment and the second heartbeat interval, where the first heartbeat interval is different from the second heartbeat interval — 510

FIG. 6

**Description**

This application claims priority to Chinese Patent Application No. 202311689035.6, filed with the China National Intellectual Property Administration on December 8, 2023 and entitled "HEARTBEAT PACKET SENDING METHOD, STORAGE APPARATUS, AND ELECTRONIC DEVICE", which is incorporated herein by reference in its entirety.

**TECHNICAL FIELD**

The present invention relates to the field of communication technologies, and in particular, to a heartbeat packet sending method, a storage apparatus, and an electronic device.

**BACKGROUND**

When a first link (for example, a high-speed peripheral component interconnect express (Peripheral Component Interconnect Express, PCIe) link) is in a low-power state, to maintain a reliable connection between a main system (for example, a host system of a notebook computer) and a subsystem (for example, a solid-state drive (Solid-state drive, SSD) subsystem in the notebook computer), the subsystem periodically sends a heartbeat packet to the main system to maintain a connection status of the first link and adjust an equalization parameter, which is referred to as "keepalive" for short. Usually, a fixed heartbeat interval is used to ensure the status of the first link. Consequently, in the conventional technology, there is a problem that both low power consumption and high reliability cannot be met at the same time.

**SUMMARY**

In view of this, embodiments of the present invention provide a heartbeat packet sending method, a storage apparatus, and an electronic device, to meet requirements for both low power consumption and high reliability.

According to a first aspect, an embodiment of the present invention provides a heartbeat packet sending method, applied to a storage apparatus, where the storage apparatus includes a processor and a memory, the memory stores a first correspondence and a target temperature difference, and the method includes:

detecting that the processor needs to enter a low-power state, and obtaining a first temperature and a first moment corresponding to the first temperature;

determining a first heartbeat interval based on the first temperature, the first moment, the first correspondence, and the target temperature difference;

sending a first heartbeat packet to a main system based on the first moment and the first heartbeat interval, and obtaining a second temperature and a second moment corresponding to the second temperature;

determining a second heartbeat interval based on the second temperature, the second moment, the first correspondence, and the target temperature difference; and

sending a second heartbeat packet to the main system based on the second moment and the second heartbeat interval, where the first heartbeat interval is different from the second heartbeat interval. After the processor of the storage apparatus in this application enters the low-power state, if a temperature difference between an ambient temperature at a next heartbeat and an ambient temperature at a previous heartbeat exceeds the target temperature difference, a link may be disconnected. In this application, a heartbeat interval is determined based on the target temperature difference, to ensure high reliability; and the heartbeat interval is determined based on the ambient temperature and the first correspondence, to determine a maximum heartbeat interval in a current temperature environment, which can meet a requirement for low power consumption. This can meet requirements for both low power consumption and high reliability.

With reference to the first aspect, in some implementations of the first aspect, the first correspondence includes a correspondence between a temperature and a moment. In this application, a temperature and a moment corresponding to the temperature are obtained during a current heartbeat, and a heartbeat interval of a next heartbeat is determined based on the target temperature difference, and the first correspondence between the temperature and the moment, so that the heartbeat interval changes with the temperature, and both low power consumption and reliability can be considered.

With reference to the first aspect, in some implementations of the first aspect, the correspondence is a temperature drop function:

$$y = A_0 e^{-\frac{t}{t_0}} + y_0$$

Herein y is a current temperature value, t is a moment, $A_0$ is a first constant, $t_0$ is a second constant, and $y_0$ is a third constant.

With reference to the first aspect, in some implementations of the first aspect, the method further includes:

detecting whether wake-up of the first link occurs; and
if wake-up of the first link occurs, entering, by the processor, a working state. When the processor of the storage apparatus in this application is in the low-power state, whether wake-up of the first link occurs is detected, and if wake-up of the first link occurs, the processor enters the working state.

With reference to the first aspect, in some implementations of the first aspect, before detecting that the processor needs to enter the low-power state, and obtaining the first temperature and the first moment corresponding to the first temperature, the method further includes:

obtaining a plurality of temperatures and moments corresponding to the plurality of temperatures a plurality of times; and
determining the first correspondence based on the plurality of temperatures and correspondences of the plurality of temperatures. In this application, the correspondence between the temperature and the moment may be generated during system running, and a system timeout link disconnection problem caused by configuration or training does not occur.

With reference to the first aspect, in some implementations of the first aspect, before detecting that the processor needs to enter the low-power state, the method further includes:
in an initialization phase, if it is determined, based on first information, that the first correspondence does not need to be updated, detecting that the processor needs to enter the low-power state, and obtaining the first temperature and the first moment corresponding to the first temperature, where the first information indicates that no exception occurs when the storage apparatus is last powered off, the storage apparatus is not powered on for the first time, and the storage apparatus is not powered on for the first time after a system is reinstalled.

If no exception occurs during the last power-off, the storage apparatus is not powered on for the first time, and the storage apparatus is not powered on for the first time after the system is reinstalled, the current first correspondence is still reliable, and the first correspondence does not need to be updated.

With reference to the first aspect, in some implementations of the first aspect, the method further includes:
determining, based on second information, that the first correspondence needs to be updated, deleting the first correspondence, and obtaining the plurality of temperatures and the moments corresponding to the plurality of temperatures the plurality of times, where the second information indicates that an exception occurs when the storage apparatus is last powered off, or the storage apparatus is powered on for the first time after a system is reinstalled.

For example, if a new system is running, for example, the storage apparatus is powered on for the first time after the system is reinstalled, the first correspondence needs to be updated, and the first correspondence needs to be deleted before the first correspondence is updated.

In this application, the first correspondence becomes invalid due to a change when the first correspondence is used to adjust the heartbeat interval. After the system is restored, new training and optimization may be performed to obtain a new correspondence.

With reference to the first aspect, in some implementations of the first aspect, the method further includes:
determining, based on third information, that the first correspondence needs to be updated, and obtaining the plurality of temperatures and the moments corresponding to the plurality of temperatures the plurality of times, where the third information indicates that the storage apparatus is powered on for the first time.

If the storage apparatus is powered on for the first time, the first correspondence needs to be updated. Because the first correspondence is not stored before, the first correspondence does not need to be deleted before the first correspondence is updated.

With reference to the first aspect, in some implementations of the first aspect, the first link includes a high-speed peripheral component interconnect express link.

With reference to the first aspect, in some implementations of the first aspect, the target temperature difference includes a maximum temperature difference allowed when the storage apparatus works normally.

According to a second aspect, an embodiment of the present invention provides a storage apparatus, including a processor and a memory. The memory is configured to store a program. When the processor runs the program, the storage apparatus is enabled to perform the foregoing method.

According to a third aspect, an embodiment of the present invention provides an electronic device, including the foregoing storage apparatus.

According to a fifth aspect, an embodiment of the present invention provides a readable storage medium. The readable storage medium stores a program. When the program is run on a device, the device is enabled to perform the foregoing method.

According to a sixth aspect, an embodiment of the present invention provides a program product. The program product includes a program. When the program is run on a device or at least one processor, the device is enabled to perform functions/steps in the foregoing method.

In the technical solutions of the heartbeat packet sending method, the storage apparatus, and the electronic device provided in embodiments of the present invention, the storage apparatus includes a processor and a memory, the memory stores a first correspondence and a target temperature difference, and the method includes: detecting that the processor needs to enter a low-power state, and obtaining a first temperature and a first moment corresponding to the first temperature; determining a first heartbeat interval based on the first temperature, the first moment, the first correspondence, and the target temperature difference; sending a first heartbeat packet to a main system based on the first moment and the first heartbeat interval, and obtaining a second temperature and a second moment corresponding to the second temperature; determining a second heartbeat interval based on the second temperature, the second moment, the first correspondence, and the target temperature difference; and sending a second heartbeat packet to the main system based on the second moment and the second heartbeat interval, where the first heartbeat interval is different from the second heartbeat interval. This can meet requirements for both low power consumption and high reliability.

## BRIEF DESCRIPTION OF DRAWINGS

FIG. 1 is a diagram of an architecture of a heartbeat packet sending system according to an embodiment of the present invention;

FIG. 2 is a signaling interworking diagram of a heartbeat packet sending method according to an embodiment of the present invention;

FIG. 3 is a diagram of a temperature rise curve and a temperature drop curve of a subsystem;

FIG. 4 is a diagram of an application scenario of the heartbeat packet sending method shown in FIG. 2;

FIG. 5 is a signaling interworking diagram before a processor detects whether the processor needs to enter a low-power state in FIG. 2;

FIG. 6 is a flowchart of a heartbeat packet sending method according to an embodiment of the present invention;

FIG. 7 is a flowchart before it is detected that a processor needs to enter a low-power state, and a first temperature and a first moment corresponding to the first temperature are obtained in FIG. 6; and

FIG. 8 is a diagram of a structure of a device according to an embodiment of the present invention.

## DESCRIPTION OF EMBODIMENTS

To better understand the technical solutions in the present invention, the following describes embodiments of the present invention in detail with reference to the accompanying drawings.

It should be clear that the described embodiments are merely some but not all of embodiments of the present invention. All other embodiments obtained by a person of ordinary skill in the art based on embodiments of the present invention without creative efforts shall fall within the protection scope of the present invention.

The terms used in embodiments of the present invention are merely for the purpose of illustrating specific embodiments, and are not intended to limit the present invention. The terms "a", "said" and "the" of singular forms used in embodiments and the appended claims of the present invention are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A receiver of a first link (for example, a high-speed peripheral component interconnect express (PCIe) link) adjusts an equalization parameter based on a received data signal in a working state, to improve link communication quality and reduce a bit error rate.

When no data is transmitted on the first link, a status of the link is switched from the working state to a low-power state, to reduce power consumption of an entire system. The low-power state includes a non-working state and a lower power consumption substate. When a processor needs to receive a signal again, the processor restores the first link to the working state based on the equalization parameter before entering the low-power state. The first link is restored to the working state for data transmission.

When the first link between a main system and a subsystem is in the low-power state, to maintain a reliable connection between the main system and the subsystem and prevent an exception from occurring on the first link again due to an environment change of the first link, the subsystem periodically sends a heartbeat packet to the main system to maintain a connection status of the first link and adjust the equalization parameter, which is referred to as "keepalive" for short. Usually, a fixed heartbeat interval is used to ensure the status of the first link.

The fixed heartbeat interval is usually a maximum interval obtained through interval increment in a trial-and-error manner. The maximum interval is determined by gradually prolonging the heartbeat interval and observing that a heartbeat does not return, which cannot adapt to online configuration on a local link, and may cause a plurality of restart failures of the system. When original heartbeat configuration cannot be used normally after an environment changes, the system cannot automatically perform configuration optimization and requires manual reconfiguration, so that the system cannot adjust the configuration based on the environment change. In a process of obtaining the maximum interval, link disconnection may occur, and related configuration adjustment cannot be performed without user awareness.

Therefore, a method for using the fixed heartbeat interval to ensure the status of the first link has poor environment adaptability. If a small heartbeat interval is used, frequent entering and exiting of the low-power state cause link overheads to increase and overall system power consumption to increase. If a large heartbeat interval is used, keepalive communication is not performed after the environment changes, which may cause link disconnection. As a result, the system cannot identify the subsystem, and reliability is low. Therefore, using the fixed heartbeat interval to ensure the status of the first link has a problem that both low power consumption and high reliability cannot be met at the same time.

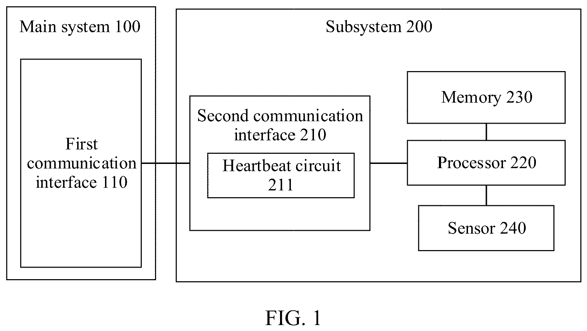

Based on the foregoing technical problem, an embodiment of the present invention provides a heartbeat packet sending system. FIG. 1 is a diagram of an architecture of a heartbeat packet sending system according to an embodiment of the present invention.

As shown in FIG. 1, the heartbeat packet sending system includes a main system 100 and a subsystem 200. The main system 100 includes a first communication interface 110. The subsystem 200 includes a second communication interface 210, a processor 220, a memory 230, and at least one sensor 240. The main system 100 communicates with the subsystem 200 through the first communication interface 110. The subsystem 200 communicates with the main system 100 through the second communication interface 210. A transmission link between the first communication interface 110 and the second communication interface 210 is a first link.

For example, the first communication interface 110 and the second communication interface 210 are high-speed peripheral component interconnect express physical layers (PCIe Phys).

As shown in FIG. 1, the second communication interface 210 of the subsystem 200 includes a heartbeat circuit 211. The heartbeat circuit 211 may send, when the first link requires "keepalive", a heartbeat packet to the first communication interface 110 of the main system 100 to adjust a link parameter.

The subsystem 200 includes a front-end module (not shown in the figure), and the second communication interface 210 belongs to the front-end module.

As shown in FIG. 1, in the subsystem 200, the second communication interface 210, the memory 230, and the sensor 240 are all connected to the processor 220.

The sensor 240 of the subsystem 200 includes a sensor, for example, a temperature sensor, configured to detect a parameter indicating that "keepalive" is required.

Based on the heartbeat packet sending system shown in FIG. 1, embodiments of the present invention provide a heartbeat packet sending method, which can consider both low power consumption and reliability.

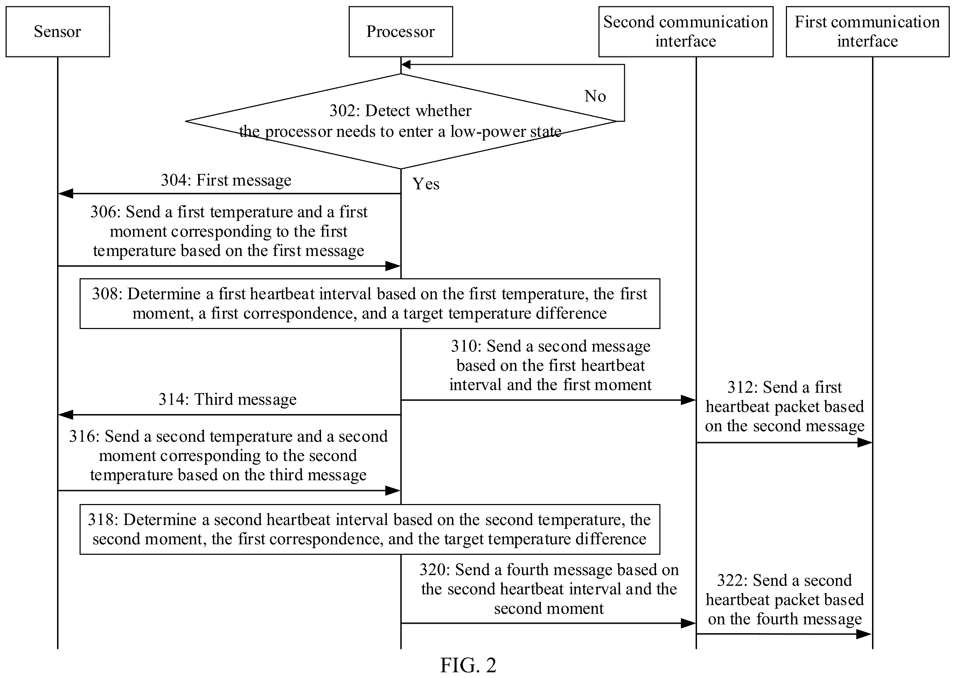

FIG. 2 is a signaling interworking diagram of a heartbeat packet sending method according to an embodiment of the present invention. As shown in FIG. 2, the method includes the following steps. Step 302: A processor detects whether the processor needs to enter a low-power state. If yes, step 304 is performed. If no, step 302 continues to be performed.

In this step, the processor of a subsystem detects whether the processor needs to enter the low-power state. When the subsystem receives a command (for example, a set feature command Set Feature of a main system) that is for entering the low-power state and that is sent by the main system or when a first link meets a requirement for entering the low-power state (for example, APST of the subsystem is enabled), the processor of the subsystem detects that the processor needs to enter the low-power state. Therefore, the processor enters the low-power state, and the first link follows by entering the low-power state. If the processor of the subsystem detects that the processor does not need to enter the low-power state, step 302 continues to be performed, and the processor waits to enter the low-power state.

For example, the first link includes a transmission link like a PCIe link between the main system and the subsystem.

For example, the main system includes a host system.

For example, the subsystem is a storage apparatus, for example, an SSD subsystem.

For example, a first state is the low-power state.

For example, the low-power state is a non-working state and a lower power consumption substate. Step 304: The processor sends a first message to a sensor.

In this step, when detecting that the processor needs to enter the low-power state, the processor of the subsystem sends the first message to the sensor. The first message includes information indicating that a first temperature and a first moment corresponding to the first temperature are obtained.

Step 306: The sensor sends the first temperature and the first moment corresponding to the first temperature to the processor based on the first message.

In this step, the sensor of the subsystem sends the first temperature and the first moment corresponding to the first temperature to the processor based on the first message.

For example, the sensor of the subsystem is configured to collect an ambient temperature of the subsystem.

For example, the first temperature is an ambient temperature of the subsystem before the processor enters the low-power state.

When the processor of the subsystem enters the low-power state, communication between the main system and the subsystem requires "keepalive". The processor of the subsystem is restored to a working state only during a heartbeat, and the sensor of the subsystem collects a temperature and sends the temperature to the processor. When the subsystem is in low power consumption, a basic detection function is maintained, a first communication interface of the subsystem is in a link idle state, and works and performs configuration only during heartbeat keepalive.

Step 308: The processor determines a first heartbeat interval based on the first temperature, the first moment, a first correspondence, and a target temperature difference.

In this step, the processor of the subsystem determines the first heartbeat interval based on the first temperature, the first moment, the first correspondence, and the target temperature difference. The processor of the subsystem obtains, from the memory, the first correspondence and the target temperature difference that are pre-stored, and determines the first heartbeat interval based on the first temperature, the first moment, the first correspondence, and the target temperature difference. When the processor in this application needs to enter the low-power state, a heartbeat interval is determined by obtaining a temperature, to associate the heartbeat interval with the temperature. For example, the first correspondence is a relationship between a temperature and a moment. In this application, a temperature and a moment corresponding to the temperature are obtained during a current heartbeat, and a heartbeat interval of a next heartbeat is determined based on the target temperature difference, and the first correspondence between the temperature and the moment. For example, the target temperature difference includes a maximum temperature difference allowed when the subsystem works normally. For example, the target temperature difference is a maximum temperature difference at which a front-end module of the subsystem runs.

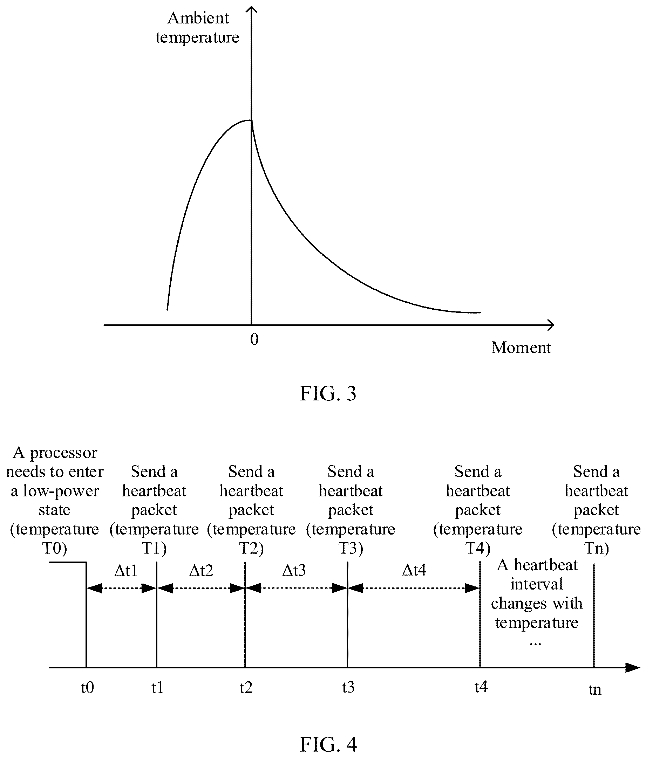

For example, the processor of the subsystem determines, based on the first correspondence, time required for the temperature to increase or decrease by the target temperature difference from the first temperature, and uses the time as the first heartbeat interval. After the processor of the subsystem enters the low-power state, if a temperature difference between an ambient temperature at a next heartbeat and an ambient temperature at a previous heartbeat exceeds the target temperature difference, a link may be disconnected. Therefore, to ensure reliability, it needs to be ensured that the temperature difference between the two heartbeats does not exceed the target temperature difference. Preferably, in this application, to ensure high reliability, the target temperature difference is selected as the temperature difference between the two heartbeats. FIG. 3 is a diagram of a temperature rise curve and a temperature drop curve of the subsystem. As shown in FIG. 3, the processor of the subsystem starts to enter the low-power state at a moment 0. Before the processor of the subsystem enters the low-power state, the subsystem works in the working state for a period of time, and the ambient temperature gradually increases. After the processor of the subsystem enters the low-power state, the ambient temperature gradually decreases. Therefore, the processor may determine, based on a correspondence between a temperature and a moment in the temperature drop curve in FIG. 3, a time interval at which the temperature decreases by the target temperature difference from the first temperature, and use the time interval as the heartbeat interval.

For example, the first correspondence may be a temperature drop function:

$$y = A_0 e^{-\frac{t}{t_0}} + y_0 \qquad\qquad \text{(Formula 1)}$$

Herein, y is a current temperature value, t is a moment, $A_0$ is a first constant, $t_0$ is a second constant, and $y_0$ is a third constant. The moment t is timing time obtained by starting timing from time at which the microprocessor of the subsystem enters the low-power state.

For example, it is assumed that the target temperature difference is $\Delta y$, the first moment is $t_1$, and the first temperature is $y_1$. In this case, the processor needs to calculate a time interval $\Delta t$ at which the temperature decreases by $\Delta y$ from $y_1$ to $y_2$, and a moment corresponding to $y_2$ is $t_2$. Because $\Delta y$, $t_1$, and $y_1$ are known, $y_2$ may be calculated according to Formula 2:

$$y_2 = y_1 - \Delta y \qquad\qquad \text{(Formula 2)}$$

Then, $y_2$ is substituted into Formula 1, so that the moment corresponding to $y_2$ may be calculated as $t_2$, that is,

$$t_2 = -t_0 \ln \frac{y_2 - y_0}{A_0} \qquad \text{(Formula 3)}$$

Then, $t_1$ and $t_2$ are substituted into Formula 4, so that $\Delta t$ may be calculated.

$$\Delta t = t_2 - t_1 \qquad \text{(Formula 4)}$$

Step 310: The processor sends the first message to a second communication interface based on the first heartbeat interval and the first moment.

In this step, the processor of the subsystem sends the first message to the second communication interface based on the first heartbeat interval and the first moment. Specifically, the processor starts first timing from the first moment, and when time of the first timing reaches the first heartbeat interval, the processor sends the second message to the second communication interface.

The second message is used as input for the second communication interface to send the first heartbeat packet to the first communication interface.

Step 312: The second communication interface sends the first heartbeat packet to the first communication interface based on the second message.

In this step, the second communication interface of the subsystem sends the first heartbeat packet to the first communication interface based on the second message.

As shown in FIG. 2, after step 310, step 314 to step 322 are further included.

Step 314: The processor sends a third message to the sensor.

In this step, after sending the second message, the processor of the subsystem sends the third message to the sensor. The third message includes information indicating that a second temperature and a second moment corresponding to the second temperature are obtained.

Optionally, step 314 and step 210 may be performed at the same time. To be specific, when the time of the first timing reaches the first heartbeat interval, the processor sends the second message and the third message at the same time.

Step 316: The sensor sends the second temperature and the second moment corresponding to the second temperature to the processor based on the third message.

In this step, the sensor of the subsystem sends the second temperature and the second moment corresponding to the second temperature to the processor based on the third message.

In this application, when the processor is in the low-power state, the processor detects in real time whether a wake-up message from the main system is received. If the processor receives the wake-up message from the main system, the processor enters the working state, and the first link also enters the working state.

Step 318: The processor determines a second heartbeat interval based on the second temperature, the second moment, the first correspondence, and the target temperature difference.

In this step, the processor of the subsystem determines the second heartbeat interval based on the second temperature, the second moment, the first correspondence, and the target temperature difference.

It should be understood that a method for determining a heartbeat interval in step 318 is the same as that in step 308. Details are not described herein again.

Step 320: The processor sends the second message to the second communication interface based on the second heartbeat interval and the second moment.

In this step, the processor of the subsystem sends a fourth message to the second communication interface based on the second heartbeat interval and the second moment.

It should be understood that a method for sending a message by the processor to the second communication interface in step 320 is the same as that in step 310. Details are not described herein again.

The fourth message is used as input for the second communication interface to send the second heartbeat packet to the first communication interface.

Step 322: The second communication interface sends the second heartbeat packet to the first communication interface based on the fourth message.

In this step, the second communication interface of the subsystem sends the second heartbeat packet to the first communication interface based on the fourth message.

For example, the first heartbeat interval is different from the second heartbeat interval. Therefore, the heartbeat interval changes. In this way, in this application, the heartbeat interval is dynamically adjusted by using the correspondence between the temperature and the moment, and both low power consumption and reliability can be considered.

Then, by analogy, if the subsystem is still in the low-power state, after the processor sends the fourth message or when the processor sends the fourth message, the processor obtains a third temperature collected by the sensor and a third moment corresponding to the third temperature, and determines a third heartbeat interval based on the third temperature, the third moment, the first correspondence, and the target temperature difference.

FIG. 4 is a diagram of an application scenario of the heartbeat packet sending method shown in FIG. 2. As shown in FIG. 4, the processor of the subsystem is in the working state at the beginning. When it is detected that the processor needs to enter low power consumption, a temperature T0 and a moment t0 corresponding to the temperature T0 are obtained. With reference to FIG. 3, it can be learned that the temperature T0 is higher at this time. The processor determines a first heartbeat interval $\Delta t1$ based on the temperature T0, the moment t0 corresponding to the temperature T0, the first correspondence, and the target temperature difference. The processor starts first timing from the moment t0. When time of the first timing reaches the first heartbeat interval $\Delta t1$, the subsystem sends a heartbeat packet to the main system and obtains a temperature T1 and a moment t1 corresponding to the temperature T1, where a temperature difference between the temperature T1 and the temperature T0 is the target temperature difference. The processor determines a second heartbeat interval $\Delta t2$ based on the temperature T1, the moment t1 corresponding to the temperature T1, the first correspondence, and the target temperature difference. The processor starts second timing from the moment t1. When time of the second timing reaches the second heartbeat interval $\Delta t2$, the subsystem sends a heartbeat packet to the main system and obtains a temperature T2 and a moment t2 corresponding to the temperature T2, where a temperature difference between the temperature T2 and the temperature T1 is the target temperature difference. The processor determines a third heartbeat interval $\Delta t3$ based on the temperature T2, the moment t2 corresponding to the temperature T2, the first correspondence, and the target temperature difference. The processor starts third timing from the moment t2. When time of the third timing reaches the third heartbeat interval $\Delta t3$, the subsystem sends a heartbeat packet to the main system and obtains a temperature T3 and a moment t3 corresponding to the temperature T3, where a temperature difference between the temperature T3 and the temperature T2 is the target temperature difference. The processor determines a fourth heartbeat interval $\Delta t4$ based on the temperature T3, the moment t3 corresponding to the temperature T3, the first correspondence, and the target temperature difference. The processor starts fourth timing from the moment t3. When time of the fourth timing reaches the fourth heartbeat interval $\Delta t4$, the subsystem sends a heartbeat packet to the main system and obtains a temperature T4 and a moment t4 corresponding to the temperature T4, where a temperature difference between the temperature T4 and the temperature T3 is the target temperature difference. The processor performs the foregoing steps in an analogous manner until the subsystem sends an $n^{th}$ heartbeat packet to the main system and obtains a temperature Tn and a moment tn corresponding to the temperature Tn. Based on the temperature drop curve shown in FIG. 3, it can be learned that a temperature drop speed is from fast to slow, and therefore time required for each temperature drop of the target temperature difference becomes longer. Therefore, the heartbeat intervals shown in FIG. 4 gradually increase. In this application, the heartbeat interval is determined based on the ambient temperature, and the maximum heartbeat interval in the current temperature environment can be determined in different temperature environments, so that a requirement for low power consumption can be met. In addition, the heartbeat interval is determined based on the target temperature difference, so that a temperature difference between two heartbeats does not exceed the target temperature difference, which can meet a requirement for high reliability.

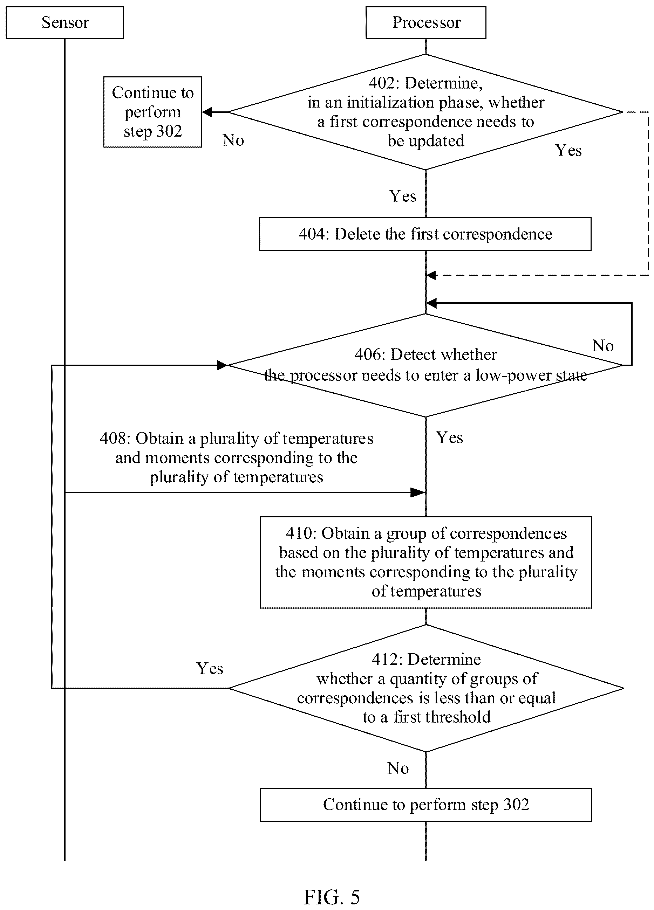

Further, FIG. 5 is a signaling interworking diagram before the processor detects whether the processor needs to enter the low-power state in FIG. 2. As shown in FIG. 5, before step 302, the method further includes the following steps.

Step 402: The processor determines, in an initialization phase, whether the first correspondence needs to be updated. If no, step 302 continues to be performed. If yes, step 404 or step 406 is performed.

In this step, the processor of the subsystem determines, in the initialization phase, whether the first correspondence needs to be updated.

In some possible embodiments, step 402 specifically includes: The processor determines, based on first information, that the first correspondence does not need to be updated, where the first information indicates that no exception occurs when the storage apparatus is last powered off, the storage apparatus is not powered on for the first time, and the storage apparatus is not powered on for the first time after the system is reinstalled. Step 404 is performed. In this application, the first correspondence becomes invalid due to a change when the first correspondence is used to adjust the heartbeat interval. After the system is restored, new training and optimization may be performed to obtain a new correspondence.

In some possible embodiments, step 402 specifically includes: The processor determines, based on second information, that the first correspondence needs to be updated, where the second information indicates that an exception occurs when the storage apparatus is last powered off, or the storage apparatus is powered on for the first time after the system is reinstalled. Step 302 continues to be performed.

In some possible embodiments, step 402 specifically includes: The processor determines, based on third information, that the first correspondence needs to be updated, where the third information indicates that the storage apparatus is powered on for the first time. Step 406 is performed.

Step 404: The processor deletes the first correspondence.

In this step, if the exception occurs when the storage apparatus is last powered off or the storage apparatus is powered on for the first time after the system is reinstalled, the current first correspondence is no longer trusted, and the processor of the subsystem deletes the stored first correspondence.

Step 406: The processor detects whether the processor needs to enter the low-power state. If yes, step 408 is performed. If no, step 406 continues to be performed.

Step 408: The processor obtains a plurality of temperatures collected by the sensor and moments corresponding to the plurality of temperatures.

In this step, after detecting that the processor needs to be in the low-power state, the processor of the subsystem obtains the plurality of temperatures collected by the sensor and the moments corresponding to the plurality of temperatures.

In some possible embodiments, step 408 specifically includes: The processor sends a fifth message to the sensor when detecting that the processor needs to be in the low-power state; the sensor sends, to the processor based on the fifth message, a temperature at which the processor enters the low-power state and a moment corresponding to the temperature; and after the processor enters the low-power state, the processor obtains at least one temperature and a moment corresponding to the temperature based on initial heartbeat configuration.

When the processor of the subsystem enters the low-power state, communication between the main system and the subsystem requires "keepalive". A heartbeat is performed based on the initial heartbeat configuration. Each time a heartbeat is performed, a status of the first link is restored, and the sensor collects a temperature and sends the temperature to the processor.

The initial heartbeat configuration means that a heartbeat solution with a small heartbeat interval is used by default for communication keepalive. In this case, power consumption of the heartbeat solution is the highest. The heartbeat interval in the initial heartbeat configuration is usually fixed. Step 410: The processor obtains a group of correspondences based on the plurality of temperatures and the moments corresponding to the plurality of temperatures.

In this step, the processor of the subsystem obtains the group of correspondences based on the plurality of temperatures and the moments corresponding to the plurality of temperatures, and stores the correspondences in the memory. The correspondences include a relationship between a temperature and a moment. For example, the correspondence may be Formula 1, namely, the temperature drop function.

In this application, the correspondence between the temperature and the moment may be generated during system running, and a system timeout link disconnection problem caused by configuration or training does not occur.

In step 410, values of $A_0$, $t_0$, and $y_0$ may be obtained by substituting the plurality of temperatures and the moments corresponding to the plurality of temperatures into Formula 1.

Step 412: The processor determines whether a quantity of groups of correspondences is less than or equal to a first threshold. If yes, step 406 continues to be performed. If no, step 302 continues to be performed.

In this step, the processor of the subsystem determines whether the quantity of groups of correspondences is less than or equal to the first threshold. If the quantity of groups of correspondences is less than or equal to the first threshold, step 406 continues to be performed, to obtain a group of new correspondences. Step 302 continues to be performed until the quantity of groups of correspondences is greater than the first threshold.

In some possible embodiments, before step 302, the method further includes: The processor determines the first correspondence based on a plurality of groups of correspondences.

For example, the correspondence includes the second constant, namely, $t_0$. The second constant indicates a speed at which a temperature increases or decreases. A larger second constant indicates faster temperature increase or decrease. A smaller second constant indicates slower temperature increase or decrease. In this application, a correspondence with the fastest temperature increase or decrease is selected as the first correspondence. This can ensure reliability of the heartbeat interval obtained based on the first correspondence, and prevent link disconnection.

In some possible embodiments, the processor determines whether a correspondence with a largest second constant in the plurality of groups of correspondences is a last correspondence. If yes, step 406 continues to be performed. If no, the correspondence with the largest second constant is determined as the first correspondence. In this application, if the correspondence with the largest second constant is the last correspondence, it indicates that there is still a high probability that a change speed of the ambient temperature continues to increase. Therefore, step 406 continues to be performed, to obtain a new correspondence. If the correspondence with the largest second constant is not the last correspondence, it indicates that there is a low probability that the change speed of the ambient temperature continues to increase. Therefore, the correspondence with the largest second constant may be directly determined as the first correspondence.

In this application, a temperature sensor is configured to record a temperature, and a temperature drop function of an environment in which the subsystem is located is calculated and fitted based on the recorded temperature. A heartbeat interval required after the subsystem enters low power consumption is calculated based on the temperature drop function and the target temperature difference allowed for running of the subsystem, and the heartbeat interval is configured as a heartbeat interval before the subsystem enters low power consumption each time, to implement online automatic configuration of the heartbeat interval during device running. If a failure occurs after the environment changes, the subsystem identifies the last abnormal shutdown after the device is restarted, can obtain a temperature drop function of a new environment in which the device is located, and configures the heartbeat interval based on the temperature drop function of the new environment, to implement online automatic configuration optimization.

The present invention obtains a rule of an ambient temperature change of the subsystem, namely, the correspondence between the temperature and the moment, and provides, through learning and training, a maximum heartbeat interval that can ensure stable running of the system, thereby achieving an optimal balance between power consumption and reliability. The device can be directly powered on and used. The correspondence is determined during use, and heartbeat parameters do not need to be manually configured or configuration and use do not need to be separately performed, thereby improving use experience and efficiency. After the environment changes, the heartbeat parameters do not need to be manually reconfigured, thereby improving use experience and efficiency.

In the technical solution of the heartbeat packet sending method provided in embodiments of the present invention, the method includes: detecting that the processor needs to enter the low-power state, and obtaining the first temperature and the first moment corresponding to the first temperature; determining the first heartbeat interval based on the first temperature, the first moment, the first correspondence, and the target temperature difference; sending the first heartbeat packet to the main system based on the first moment and the first heartbeat interval, and obtaining the second temperature and the second moment corresponding to the second temperature; determining the second heartbeat interval based on the second temperature, the second moment, the first correspondence, and the target temperature difference; and sending the second heartbeat packet to the main system based on the second moment and the second heartbeat interval, where the first heartbeat interval is different from the second heartbeat interval. This can meet requirements for both low power consumption and high reliability.

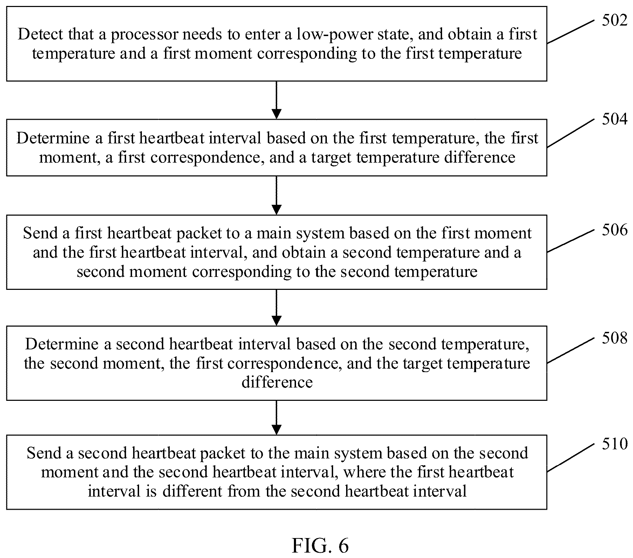

FIG. 6 is a flowchart of a heartbeat packet sending method according to an embodiment of the present invention. The heartbeat packet sending method is applied to a storage apparatus. The storage apparatus includes a processor and a memory. The memory stores a first correspondence and a target temperature difference. As shown in FIG. 6, the method includes the following steps. Step 502: Detect that the processor needs to enter a low-power state, and obtain a first temperature and a first moment corresponding to the first temperature.

For example, a first link includes a high-speed peripheral component interconnect express link. Step 504: Determine a first heartbeat interval based on the first temperature, the first moment, the first correspondence, and the target temperature difference.

For example, the first correspondence includes a correspondence between a temperature and a moment.

For example, the target temperature difference includes a maximum temperature difference allowed when the storage apparatus works normally.

Step 506: Send a first heartbeat packet to a main system based on the first moment and the first heartbeat interval, and obtain a second temperature and a second moment corresponding to the second temperature.

In some possible embodiments, step 506 specifically includes: starting first timing from the first moment, and sending the first heartbeat packet to the main system when time of the first timing reaches the first heartbeat interval.

Step 508: Determine a second heartbeat interval based on the second temperature, the second moment, the first correspondence, and the target temperature difference.

Step 510: Send a second heartbeat packet to the main system based on the second moment and the second heartbeat interval, where the first heartbeat interval is different from the second heartbeat interval.

In some possible embodiments, step 510 specifically includes: starting second timing from the second moment, and sending the second heartbeat packet to the main system when time of the second timing reaches the second heartbeat interval.

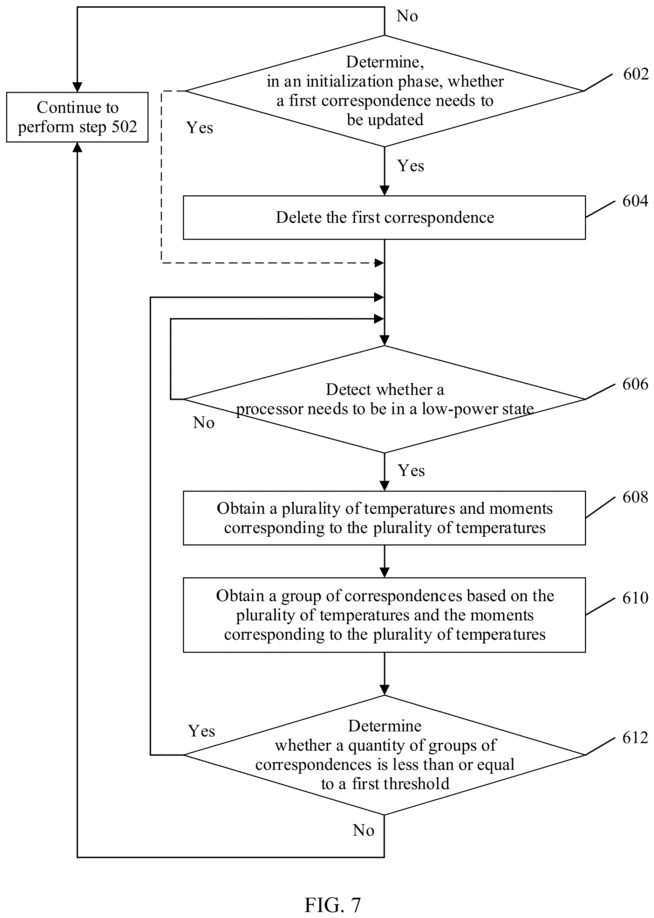

FIG. 7 is a flowchart before it is detected that the processor needs to enter the low-power state, and the first temperature and the first moment corresponding to the first temperature are obtained in FIG. 6. As shown in FIG. 7, the method includes the following steps.

Step 602: Determine, in an initialization phase, whether the first correspondence needs to be updated. If no, continue to perform step 502. If yes, perform step 604 or step 606.

In some possible embodiments, step 602 specifically includes: determining, based on first information, that the first correspondence does not need to be updated, where the first information indicates that no exception occurs when the storage apparatus is last powered off, the storage apparatus is not powered on for the first time, and the storage apparatus is not powered on for the first time after the system is reinstalled. Step 604 is performed.

In some possible embodiments, step 602 specifically includes: determining, based on second information, that the first correspondence needs to be updated, where the second information indicates that an exception occurs when the storage apparatus is last powered off, or the storage apparatus is powered on for the first time after the system is reinstalled. Step 502 continues to be performed.

In some possible embodiments, step 602 specifically includes: determining, based on third information, that the first correspondence needs to be updated, where the third information indicates that the storage apparatus is powered on for the first time. Step 606 is performed.

Step 604: Delete the first correspondence.

Step 606: Detect whether the processor needs to be in the low-power state. If yes, perform step 608. If no, continue to perform step 606.

Step 608: Obtain a plurality of temperatures and moments corresponding to the plurality of temperatures.

In some possible embodiments, step 608 specifically includes: detecting that the processor needs to be in the low-power state, and obtaining a temperature and a moment corresponding to the temperature when the processor enters the low-power state; and after the processor enters the low-power state, obtaining at least one temperature and a moment corresponding to the temperature based on initial heartbeat configuration.

Step 610: Obtain a group of correspondences based on the plurality of temperatures and the moments corresponding to the plurality of temperatures.

Step 612: Determine whether a quantity of groups of correspondences is less than or equal to a first threshold. If yes, continue to perform step 606. If no, continue to perform step 502.

In the technical solution of the heartbeat packet sending method provided in embodiments of the present invention, the method includes: detecting that the processor needs to enter the low-power state, and obtaining the first temperature and the first moment corresponding to the first temperature; determining the first heartbeat interval based on the first temperature, the first moment, the first correspondence, and the target temperature difference; sending the first heartbeat packet to the main system based on the first moment and the first heartbeat interval, and obtaining the second temperature and the second moment corresponding to the second temperature; determining the second heartbeat interval based on the second temperature, the second moment, the first correspondence, and the target temperature difference; and sending the second heartbeat packet to the main system based on the second moment and the second heartbeat interval, where the first heartbeat interval is different from the second heartbeat interval. This can meet requirements for both low power consumption and high reliability.

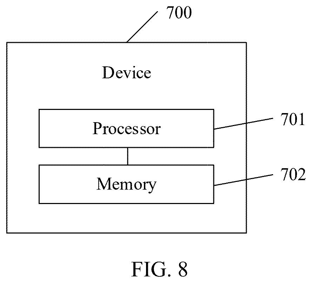

FIG. 8 is a diagram of a structure of a device according to an embodiment of the present invention. It should be understood that a device 700 can perform the steps in the foregoing heartbeat packet sending method. To avoid repetition, details are not described herein again. The device 700 includes a processor 701 and a memory 702.

An embodiment of this application further provides a storage apparatus, including at least one processor 701 and at least one memory 702. The at least one memory 702 is configured to store at least one program. When the at least one processor 701 runs the at least one program, the storage apparatus is enabled to perform the operations in the foregoing method embodiments and FIG. 2 to FIG. 7.

An embodiment of this application further provides an electronic device, including at least one processor 701 and at least one memory 702. The at least one memory 702 is configured to store at least one program. When the at least one processor 701 runs the at least one program, the electronic device is enabled to perform the operations in the foregoing method embodiments and FIG. 2 to FIG. 7.

An embodiment of this application further provides a readable storage medium. The readable storage medium stores a program. When the program runs on a storage apparatus, the storage apparatus is enabled to perform the operations in the foregoing method embodiments and FIG. 2 to FIG. 7.

An embodiment of this application further provides a readable storage medium. The readable storage medium stores a program. When the program runs on an electronic device, the electronic device is enabled to perform the operations in the foregoing method embodiments and FIG. 2 to FIG. 7.

An embodiment of this application further provides a program product. When the program product is run on a storage apparatus or any one of at least one processor, the storage apparatus is enabled to perform the operations in the foregoing method embodiments and FIG. 2 to FIG. 7.

An embodiment of this application further provides a program product. When the program product is run on an electronic device or any one of at least one processor, the electronic device is enabled to perform the operations in the foregoing method embodiments and FIG. 2 to FIG. 7.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a heartbeat sending apparatus, an electronic device, a computer, a server, or a network device) to perform all or a part of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of embodiments of this application. Any variation or replacement readily figured out by a person skilled in the art within the technical scope disclosed in this application shall fall within the protection scope in embodiments of this application. The protection scope of this application shall be subject to the protection scope of the claims.

**Claims**

1. A heartbeat sending method, applied to a storage apparatus, wherein the storage apparatus comprises a processor and a memory, the memory stores a first correspondence and a target temperature difference, and the method comprises:

   detecting that the processor needs to enter a low-power state, and obtaining a first temperature and a first moment corresponding to the first temperature;
   determining a first heartbeat interval based on the first temperature, the first moment, the first correspondence, and the target temperature difference;
   sending a first heartbeat packet to the main system based on the first moment and the first heartbeat interval, and obtaining a second temperature and a second moment corresponding to the second temperature;
   determining a second heartbeat interval based on the second temperature, the second moment, the first correspondence, and the target temperature difference; and
   sending a second heartbeat packet to the main system based on the second moment and the second heartbeat interval, wherein the first heartbeat interval is different from the second heartbeat interval.

2. The method according to claim 1, wherein the first correspondence comprises a correspondence between a temperature and a moment.

3. The method according to claim 2, wherein the correspondence is a temperature drop function:

$$y = A_0 e^{-\frac{t}{t_0}} + y_0,$$

   wherein
   y is a current temperature value, t is a moment, $A_0$ is a first constant, $t_0$ is a second constant, and $y_0$ is a third constant.

4. The method according to any one of claims 1 to 3, wherein the method further comprises:

   detecting whether wake-up of the first link occurs; and
   if wake-up of the first link occurs, entering, by the processor, a working state.

5. The method according to any one of claims 1 to 4, wherein before detecting that the processor needs to enter the low-power state, and obtaining the first temperature and the first moment corresponding to the first temperature, the method further comprises:

   obtaining a plurality of temperatures and moments corresponding to the plurality of temperatures a plurality of times, to obtain a plurality of groups of correspondences; and
   determining the first correspondence based on the plurality of groups of correspondences.

6. The method according to any one of claims 1 to 5, wherein before detecting that the processor needs to enter the low-power state, the method further comprises:
   in an initialization phase, if it is determined, based on first information, that the first correspondence does not need to be updated, obtaining the first temperature and the first moment corresponding to the first temperature, wherein the first information indicates that no exception occurs when the storage apparatus is last powered off, the storage apparatus is not powered on for the first time, and the storage apparatus is not powered on for the first time after a system is reinstalled.

7. The method according to claim 5, wherein the method further comprises:
   determining, based on second information, that the first correspondence needs to be updated, deleting the first

EP 4 734 471 A1

correspondence, and obtaining the plurality of temperatures and the moments corresponding to the plurality of temperatures the plurality of times, wherein the second information indicates that an exception occurs when the storage apparatus is last powered off, or the storage apparatus is powered on for the first time after a system is reinstalled.

8.  The method according to claim 5, wherein the method further comprises:
determining, based on third information, that the first correspondence needs to be updated, and obtaining the plurality of temperatures and the moments corresponding to the plurality of temperatures the plurality of times, wherein the third information indicates that the storage apparatus is powered on for the first time.

9.  The method according to any one of claims 1 to 8, wherein the first link comprises a high-speed peripheral component interconnect express link.

10. The method according to any one of claims 1 to 9, wherein the target temperature difference comprises a maximum temperature difference allowed when the storage apparatus works normally.

11. A storage apparatus, comprising a processor and a memory, wherein the memory is configured to store a program, and when the processor runs the program, the storage apparatus is enabled to perform steps of the method according to any one of claims 1 to 10.

12. An electronic device, comprising the storage apparatus according to claim 11.

13. A readable storage medium, wherein the readable storage medium stores a program, the program comprises program instructions, and when the program instructions are run on an electronic device, the electronic device is enabled to perform the method according to any one of claims 1 to 10.

```
┌─────────────────────┐  ┌──────────────────────────────────────────────────────┐
│  Main system 100    │  │                  Subsystem 200                         │
│                     │  │                                                        │
│  ┌───────────────┐  │  │                               ┌──────────────────┐    │
│  │               │  │  │                               │   Memory 230     │    │
│  │     First     │  │  │  ┌─────────────────────────┐  └──────────────────┘    │
│  │ communication │──┼──┼──│ Second communication    │  ┌──────────────────┐    │
│  │ interface 110 │  │  │  │    interface 210        │  │  Processor 220   │    │
│  │               │  │  │  │ ┌─────────────────────┐ │──│                  │    │
│  │               │  │  │  │ │ Heartbeat circuit   │ │  └──────────────────┘    │
│  │               │  │  │  │ │        211          │ │  ┌──────────────────┐    │
│  │               │  │  │  │ └─────────────────────┘ │  │   Sensor 240     │    │
│  │               │  │  │  └─────────────────────────┘  └──────────────────┘    │
│  └───────────────┘  │  │                                                        │
└─────────────────────┘  └──────────────────────────────────────────────────────┘
```

FIG. 1

| Sensor | Processor | Second communication interface | First communication interface |
|---|---|---|---|

302: Detect whether the processor needs to enter a low-power state

No

Yes

304: First message

306: Send a first temperature and a first moment corresponding to the first temperature based on the first message

308: Determine a first heartbeat interval based on the first temperature, the first moment, a first correspondence, and a target temperature difference

310: Send a second message based on the first heartbeat interval and the first moment

312: Send a first heartbeat packet based on the second message

314: Third message

316: Send a second temperature and a second moment corresponding to the second temperature based on the third message

318: Determine a second heartbeat interval based on the second temperature, the second moment, the first correspondence, and the target temperature difference

320: Send a fourth message based on the second heartbeat interval and the second moment

322: Send a second heartbeat packet based on the fourth message

FIG. 2

Ambient temperature

0

Moment

FIG. 3

| A processor needs to enter a low-power state (temperature T0) | Send a heartbeat packet (temperature T1) | Send a heartbeat packet (temperature T2) | Send a heartbeat packet (temperature T3) | Send a heartbeat packet (temperature T4) | Send a heartbeat packet (temperature Tn) |

$\Delta t1$   $\Delta t2$   $\Delta t3$   $\Delta t4$   A heartbeat interval changes with temperature ...

t0   t1   t2   t3   t4   tn

FIG. 4

```
         ┌─────────┐                                    ┌───────────┐
         │ Sensor  │                                    │ Processor │
         └─────────┘                                    └───────────┘
                                              402: Determine,
    ┌──────────┐                       in an initialization phase, whether
    │Continue to│◄───────────────┐        a first correspondence needs to
    │ perform   │     No                        be updated                      Yes
    │ step 302  │
    └──────────┘
                                              Yes

                              ┌─────────────────────────────────────────┐
                              │     404: Delete the first correspondence │
                              └─────────────────────────────────────────┘

                                                                        No
                                              406: Detect whether
                          ◄──────────── the processor needs to enter a low-power state

    408: Obtain a plurality of temperatures          Yes
      and moments corresponding to the
           plurality of temperatures

                              ┌─────────────────────────────────────────┐
                              │  410: Obtain a group of correspondences  │
                              │  based on the plurality of temperatures and│
                              │  the moments corresponding to the plurality│
                              │           of temperatures                │
                              └─────────────────────────────────────────┘

                                              412: Determine
                          Yes       whether a quantity of groups of
                              correspondences is less than or equal
                                        to a first threshold

                                                  No
                              ┌─────────────────────────────────────────┐
                              │      Continue to perform step 302        │
                              └─────────────────────────────────────────┘
```

FIG. 5

Detect that a processor needs to enter a low-power state, and obtain a first temperature and a first moment corresponding to the first temperature

502

Determine a first heartbeat interval based on the first temperature, the first moment, a first correspondence, and a target temperature difference

504

Send a first heartbeat packet to a main system based on the first moment and the first heartbeat interval, and obtain a second temperature and a second moment corresponding to the second temperature

506

Determine a second heartbeat interval based on the second temperature, the second moment, the first correspondence, and the target temperature difference

508

Send a second heartbeat packet to the main system based on the second moment and the second heartbeat interval, where the first heartbeat interval is different from the second heartbeat interval

510

FIG. 6

FIG. 7

700

Device

Processor — 701

Memory — 702

FIG. 8

## INTERNATIONAL SEARCH REPORT

| | International application No. |
|---|---|
| | **PCT/CN2024/116210** |

**A. CLASSIFICATION OF SUBJECT MATTER**

H04L43/103(2022.01)i；H04L43/106(2022.01)i

According to International Patent Classification (IPC) or to both national classification and IPC

**B. FIELDS SEARCHED**

Minimum documentation searched (classification system followed by classification symbols)

IPC:H04L G06F G11C

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 保活, 心跳, 存储, 非易失, 固态, 低功耗, 低功率, 唤醒, 温差, 温度, 差值, heartbeat, NVM, SSD, solid state drive, PCIE, temperatur+, differenc+, +wake+

**C. DOCUMENTS CONSIDERED TO BE RELEVANT**

| Category* | Citation of document, with indication, where appropriate, of the relevant passages | Relevant to claim No. |
|---|---|---|
| A | CN 114816848 A (INNOGRIT TECHNOLOGY (SHANGHAI) CO., LTD.) 29 July 2022 (2022-07-29)<br>description, paragraphs [0002]-[0003] and [0012]-[0032], and figures 1-3 | 1-13 |
| A | CN 110500718 A (ZHUHAI GREE ELECTRIC APPLIANCES INC.) 26 November 2019 (2019-11-26)<br>entire document | 1-13 |
| A | CN 114974342 A (CHANGXIN MEMORY TECHNOLOGIES, INC.) 30 August 2022 (2022-08-30)<br>entire document | 1-13 |
| A | CN 116431061 A (MICRON TECHNOLOGY, INC.) 14 July 2023 (2023-07-14)<br>entire document | 1-13 |
| A | CN 115729342 A (SAMSUNG ELECTRONICS CO., LTD.) 03 March 2023 (2023-03-03)<br>entire document | 1-13 |
| A | JP 2019204229 A (MITSUBISHI ELECTRIC CORP.) 28 November 2019 (2019-11-28)<br>entire document | 1-13 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 October 2024** | **11 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/116210** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2016365138 A1 (SAMSUNG ELECTRONICS CO., LTD.) 15 December 2016 (2016-12-15)<br>entire document | 1-13 |
| A | US 2019146687 A1 (SILICON MOTION INC.) 16 May 2019 (2019-05-16)<br>entire document | 1-13 |
| A | US 6370656 B1 (COMPAQ INFORMATION TECHNOLOGIES GROUP, L. P.) 09 April 2002 (2002-04-09)<br>entire document | 1-13 |

Form PCT/ISA/210 (second sheet) (July 2022)

## INTERNATIONAL SEARCH REPORT
### Information on patent family members

International application No.

**PCT/CN2024/116210**

| Patent document cited in search report | | | Publication date (day/month/year) | Patent family member(s) | | | Publication date (day/month/year) |
|---|---|---|---|---|---|---|---|
| CN | 114816848 | A | 29 July 2022 | US | 2022326862 | A1 | 13 October 2022 |
| | | | | US | 11861186 | B2 | 02 January 2024 |
| | | | | US | 2024086089 | A1 | 14 March 2024 |
| CN | 110500718 | A | 26 November 2019 | None | | | |
| CN | 114974342 | A | 30 August 2022 | None | | | |
| CN | 116431061 | A | 14 July 2023 | US | 2023222042 | A1 | 13 July 2023 |
| CN | 115729342 | A | 03 March 2023 | KR | 20230033414 | A | 08 March 2023 |
| | | | | US | 2023064572 | A1 | 02 March 2023 |
| | | | | US | 11829224 | B2 | 28 November 2023 |
| JP | 2019204229 | A | 28 November 2019 | None | | | |
| US | 2016365138 | A1 | 15 December 2016 | KR | 20160147509 | A | 23 December 2016 |
| | | | | KR | 102372888 | B1 | 10 March 2022 |
| | | | | US | 9633711 | B2 | 25 April 2017 |
| US | 2019146687 | A1 | 16 May 2019 | US | 10942653 | B2 | 09 March 2021 |
| | | | | JP | 2019091517 | A | 13 June 2019 |
| | | | | JP | 6717894 | B2 | 08 July 2020 |
| | | | | TWI | 646548 | B | 01 January 2019 |
| | | | | TW | 201923760 | A | 16 June 2019 |
| | | | | JP | 2020144974 | A | 10 September 2020 |
| | | | | JP | 6961759 | B2 | 05 November 2021 |
| | | | | CN | 109799949 | A | 24 May 2019 |
| US | 6370656 | B1 | 09 April 2002 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311689035